# EUROPEAN PATENT SPECIFICATION

(11) **EP 3 274 116 B1**
(45) Date of publication and mention of the grant of the patent: **26.06.2019**
(21) Application number: 16725248.5
(22) Date of filing: 21.03.2016
(51) Int. Cl.: B23B 27/16, B25B 5/08

(54) **TOOL HOLDER, IN PARTICULAR TURNING TOOL HOLDER, WITH RAPID LOCKING SYSTEM FOR INTERCHANGEABLE INSERTS**
WERKZEUGHALTER, INSBESONDERE DREHWERKZEUGHALTER, MIT SCHNELLARRETIERUNGSSYSTEM FÜR AUSTAUSCHBARE EINSÄTZE
PORTE-OUTIL, EN PARTICULIER PORTE-OUTIL DE TOURNAGE, AYANT UN SYSTÈME DE VERROUILLAGE RAPIDE POUR DES INSERTS INTERCHANGEABLES

(30) Priority: 23.03.2015 IT VE20150011
(43) Date of publication of application: 31.01.2018
(73) Proprietor: Ferraresso, Claudio, 30037 Scorzè (VE) (IT)
(72) Inventor: Ferraresso, Claudio, 30037 Scorzè (VE) (IT)
(86) International application number: PCT/IT2016/000069
(87) International publication number: WO 2016/151610

(56) References cited:
- WO-A1-2014/056830
- CH-A- 409 588
- DE-A1- 2 720 249
- FR-A- 1 544 861
- GB-A- 1 404 997
- GB-A- 1 417 434
- GB-A- 2 090 627
- JP-U- S5 062 782
- US-A- 2 337 483
- US-A- 2 344 832
- US-A- 3 787 024
- US-A1- 2014 294 520

## Description

### TECHNICAL FIELD

The present invention relates to metal cutting tools, and particulary to a turning tool holder configured for turning machining.

The said turning tool holder is equipped with a rapid locking system for mechanical fastening of interchangeable inserts in the tool holder body of Carbide Tungsten, Cermet, Ceramics, PCBN (Diamond Cubic Boron Nitride) and PCD (Polycrystalline Diamond), allowing a reduction of the times needed to restore the turning tool holder, consequently reducing the latch time of production and possibly increasing production capacity for a company.

To date, the most widespread of insert locking systems, involving fastening of an insert on the tool holder body, is carried out mechanically by the closing of a threaded screw and manually using a tool key. The closure of the screw acts on a clamp that, that when the closure of the fixing screw is completed, presses and locks the insert in the tool holder.

When the edge is worn, the rotation of the cutting edge of the insert or the replacement of the insert itself is needed. By unscrewing the screw, the insert can be released and made free to be replaced by a number of key rotations which have to be carried out.

The number of necessary rotations is directly proportional to the pitch of the screw threading and the necessary height of the clamp allowing the insert to be released and free to remove.

To date, this operation requires time that is directly bound to the type of system adopted by different manufacturers, the organization and the operator's manual ability.

### BACKGROUND ART

Numerous rapid locking systems are known from previous patent applications, including:

### US7153069

According to the invention described in the patent US7153069, by pushing the release button, mechanically the clamp/lever that locks the insert raises, disengaging the insert and allowing the operation of restoring on the tool. With a rotated cutting edge or replaced insert, the insert clamping takes place by pressing the clamp at the top. This activates the internal mechanism composed of levers and springs and the clamp goes to rest on the upper surface of the insert. During this operation, the operator does not have the same perception of the insert clamped as in the conventional screw system.

Tests performed on this system have shown that the pressure generated by the system on the insert does not guarantee the necessary strength to make the whole system stable and rigid in roughing machining with medium to high metal removal rates.

This condition may cause the triggering of vibrations during machining, forcing the insert edge to withstand abnormal stress which often leads to chipping, limiting the possibilities of use. Furthermore, the system does not provide for the use of tools or a key and requires an operation by using the fingers. There is also a risk that small metal particles that remain from the machining by chip removal of ferrous and non-ferrous materials will be in areas of the tool holder, in which the operator has to act in order to index or replace the insert.

Bearing in mind the limited size of the tool holders and inserts, the possible and proper use of protective anti-cut gloves will limit the operator's manual ability.

### WO20141056830 A1

WO2014/056830 A1 discloses a tool holder having the features of the preamble of independent claim 1. In the tool holder of this document pressure on the back part of the clamp allows the replacement of the insert.

This operation, is poorly accessible due to the positioning of the tool holder on the toolhead of the machine tool. In order to achieve maximum rigidity of the whole system during external turning machining, normally the tool holder is installed on the toolhead of machine, with the shorter overhang possible, a condition that limits the manual access on the clamp that locks the insert and is placed behind the clamp, limiting the possibility to exercise the necessary pressure to activate the system.

Even in this system, the pressure exerted on the insert is directly proportional to the loading force of the spring, and the clamping of insert takes place without transferring to operator the same belief of the insert being locked that would be gained through the use of a screw.

In order to increase the stability of the insert, more pressure on the insert will be needed and more pressure force on the lever will be required by the operator.

Furthermore, the system does not provide for the use of tools or a key and requires operation by using the fingers. There is also a risk that small metal particles that remain from the machining by chip removal of ferrous and non-ferrous materials will be in areas of the tool holder, in which the operator has to act in order to index or replace the insert.

Bearing in mind the limited size of the tool holders and inserts, the possible and proper use of protective anti-cut gloves will limit the operator's manual ability.

### US3787024

According to the invention described in patent US3787024, the locking system provides the use of a threaded pin which is used to drive the clamp with a movement that is spread only along the axis of pin.

The said pin is provided with a cylindrical pin extended in a radial position with respect to the axis of the threaded pin and cooperating with two cam sections equipped with a detent recess of the cylindrical pin, arranged near to the threaded pin. In order to speed up the locking and unlocking action, through the rotation of the nut provided with the cam sections, the threaded pin cooperates with a threaded nut that allows to register the height required for movement, is secured to the engine block by the nut without allowing its rotation.

This system could not be seen as finding application in a turning tool holder due to the clamp that should ensure a flexion to keep the parts locked. Since the system does not having a centring button, an inclined sliding surface on least one of the two ends of support or a related sliding seat on the said clamp, an angular sliding movement cannot be done to lock an interchangeable insert on its seat, in order to eliminate possible tolerances due to the manufacturing process.

According to the specification, the application of this rapid locking system is directly addressed to locking or the removal of a distributor from an automotive engine block.

### GB2090627

According to the invention described in patent GB2090627, the clamping action and release of the system is apt to unite and lock two panel elements between them without the possibility to have a movement between of them. Such a locking system develops the closing and opening action only along the axis of the drive pin.

The system cannot be installed on a turning tool holder, because the clamp cooperating with the drive pin is not provided. The movement of an interchangeable insert would not be guaranteed in order for it to enter securely in its seat, such that possible tolerances generated by the production process were eliminated. Furthermore, the system does not provide for the eventual interchangeability of the panel elements involved in the complex of system.

### GB1404997

According to the patent application GB1404997, the locking action occurs through the sliding of an element with a conical surface along the axis of the drive pin. The sliding of the conical surface, which is located in the opposite position to the surface parallel to the axis of the drive pin and cooperating with an appropriate sliding seat provided in the milling cutter body, generates a pressure action on the insert in its seat.

According to the specification, the application of this rapid locking system is specifically directed to milling tools with interchangeable inserts for milling machining. The system is not applicable on a turning tool due to the locking wedge, that necessarily needs to scroll inside a guide that has to ensure three contact points on the wedge. The tool holder body should necessarily be provided with a seat for the sliding of wedge, which is placed over the insert. The large dimensions of components needed for applying this system on top of insert, does not allow an easy and correct chip evacuation, and it could have limited application on the machine tools aimed to produce small components.

### GB1417434

According to the patent application GB1417434, the locking action takes place through the sliding of a drive pin along its axis, the guide pin cooperating with a cylindrical pin radial installed on the pin itself. The head of the drive pin is provided with a cam profile which, once the receiving seat formed in the insert is reached, through the rotation of the drive pin presses the insert into its seat.

According to the specification, the application of this rapid locking system is specifically suited for a milling cutter with interchangeable inserts for milling machining.

The system is not applicable on a turning tool in that the head of the drive pin equipped with a cam profile acts directly and perpendicularly to the receiving seat formed in the insert and does not provide for the use of a clamp. In a turning tool holder, the positioning of the drive pin has to be in radial position, rather than perpendicular to the insert surface. Moreover, the said system has some application limits on the milling cutters with small diameters due to the positioning of this locking system, placed between the clamping hole of milling cutter to the chuck and the internal side of the insert seat.

### DE2720249

According to the patent application DE2720249, the clamping of the insert in a turning tool holder takes place through the rotation of a drive pin which slides axially with respect to the tool holder body. The said drive pin has one end with a spherical profile in contact and cooperating with the clamp for locking the insert. The clamp is equipped with a radial pin in respect to the axis of the drive pin and provided with the same spherical profile.

During rotation of the drive pin and through the sliding of the two spherical profiles, the locking or unlocking action of the system is generated.

To date, the said tool holder would be only used on manual machine tools, parallel lathes or semi-automatic lathes, where the tool holder head is placed on the operator side with respect to the axis of the spindle. On this type of machine tool, the lack of fairings would permit an easy access to the rear side of the tool holder body.

The tool holder of DE2720249 would not find an application on the current CNC lathe machine because the tool holder head is positioned on the opposite side of the axis of rotation to the operator.

On replacement of the insert, the access to the rear side of the tool holder body in order to activate the drive pin would be at the farthest point to the operator, not allowing an easy access and making the replacement operation of insert, potentially dangerous due to the necessity to go beyond the rotation axis with the body of the operator.

### CH409588

According to the patent application CH409588, an insert locking system for a turning tool holder provides that the locking action or release of the system takes place manually and by means of the pressure exerted on the drive pin head placed on the bottom side of tool holder body.

The said drive pin, at the opposite end, is equipped with a tapered head cooperating with the conical surface present in the hole of the insert, allowing the scrolling in the receiving seat. Because the system of CH409588 does not provide for the use of a key tool, the pressure exerted on the insert is directly proportional to the loading force of the spring, and the clamping of insert is performed without transferring the same belief of the insert being locked to the operator as would be gained by the use of a screw. Furthermore, there is a risk that small metal particles that remain from the machining by chip removal of ferrous and non-ferrous materials will be in areas of the tool holder, in which the operator has to act in order to index or replace the insert.

### TECHNICAL PROBLEM TO BE SOLVED AND SUMMARY OF THE INVENTION

it is an object of the present invention to provide a tool holder that overcomes some, if not all, of the deficiencies noted above with respect to the prior art. This object is fulfilled by a tool holder according to independent claim 1. Preferred embodiments form the subject-matter of the dependent claims.

The invention provides for the manual and mechanical locking and unlocking of an insert positioned in the tool holder body with a movement of only 90 degrees, for restoring of the turning tool holder and make it ready for the turning machining.

The rotation of the insert edge or its replacement necessarily forces the lathe machine and the related production to stop.

With the aim of speeding up the restoring operation of the turning tool holder, it is possible to reduce the times needed to restore the turning tool holder, consequently reducing the latch time of production and increasing the production capacity for a company.

The "savings" that can be generated is directly proportional to the hourly cost of the lathe machine tool.

In the standard process for restoring a turning tool holder, the following steps are performed:
A. Unlocking of the clamping system through the screw rotation.
B. Removing of insert
C. Blowing, checking and cleaning the receiving seat of insert
D. Positioning of insert
E. Closing of the clamping system through the screw rotation.

A study revealed that the toolholder of the invention does not change the normal procedure but speeds up and allows the reduction of time needed on the steps A and E.

Tests carried out, allows one to estimate a possible reduction of time needed to restore the turning tool holder between -50% and -70%.

### BRIEF DESCRIPTION OF DRAWINGS

An illustrative embodiment of the tool holder of the invention is represented in the attached drawings in which:
Figures 1 and 1a show the turning tool holder in open position, wherein it is possible to remove or replace the insert (21) from the tool holder body (1). The clamp (5) is in the relaeased position due to the compression spring (4).
Fig. 2 shows only the rapid locking system in the release position seen from the bottom of the tool holder.
   The cylindrical pin (8) mounted with radial extension relative to drive pin (7) and secured by the grub screw (9) is positioned between the two cams (10) and its surface is coincident and tangential to the base of housing seat (23).
Fig. 3 shows the action of a rapid locking system seen from the bottom of the tool holder.
   Through the rotation of the drive pin (7), the cylindrical pin (8), that extends in a radial direction and is fixed by a grub screw (9) to the drive pin (7), is following the helical section (S) and so it moves the drive pin (7) cooperating with the clamp (5) along its axis.
Fig. 4 shows the rapid locking system in the closed position seen from the bottom of the tool holder.
   The cylindrical pin (8) is positioned in to the detent recess in order to determine the end of the locking action.
Fig. 5 shows the turning tool holder in the closed position, wherein the insert (21) is locked in the insert seat (30) of the tool holder body (1). The combined movements of the descent of the drive pin (7) and parallel movement due to the inclined sliding surface (25) that slides on the sliding seat (26) have been made.

### DETAILED DESCRIPTION OF THE INVENTION

The subject matter of this patent application, the locking and unlocking action of the insert (21), takes place mechanically and in just 90 degrees, by using of a tool key (22) and through the rotation of the drive pin (7) that by rotating, generates a simultaneous movement on the clamp (5) downward along the axis of the drive pin (7), pressing on the upper surface of the insert (21) and pulling, due to the sliding of inclined sliding surface (25) in the sliding seat (26) formed on the the tool holder body (1).

Turning of 90 degrees in the opposite direction, the drive pin (7) cooperating with the clamp (5), due to the thrust of the compression spring (4), releases the insert (21) and allows its replacement or the rotation of the cutting edge.

To begin the detailed description of the object solution, we theoretically have to start a turning machining and prepare the tool holder.

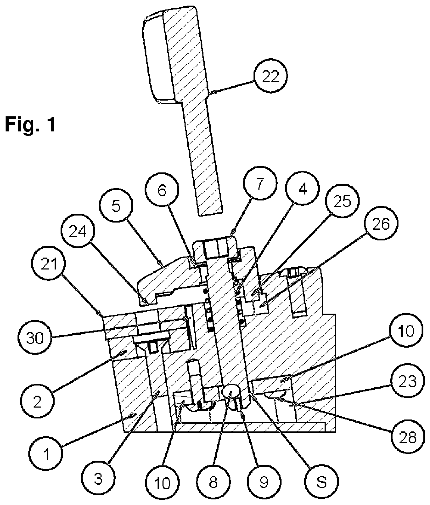

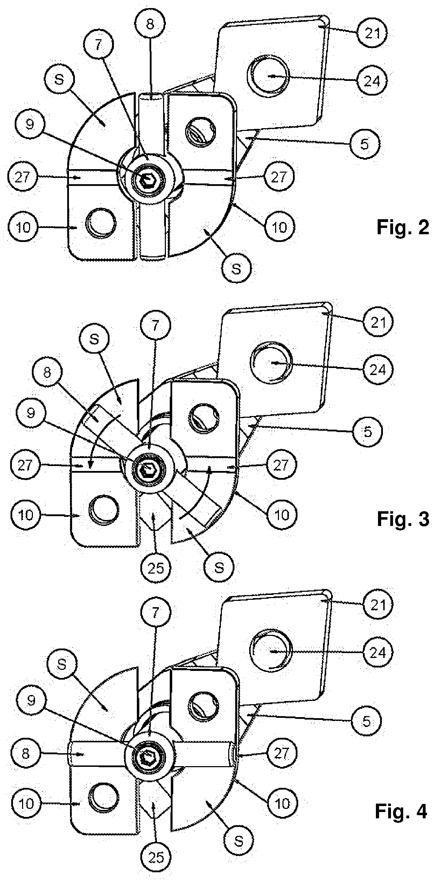

With reference to Fig. 1, 1a, 2, 3, 4, the tool holder is in the open position with the clamp (5), cooperating with the drive pin (7), which is located in the raised position thanks to the thrust of the compression spring (4). In this way, the insert (21) can be placed in the insert seat (30) of the tool holder body (1).

By inserting the tool key (22) into the seat formed in the drive pin (7) and performing a rotation of between 0 and 90 degrees, the cylindrical pin (8), that extends radially relative to the drive pin (7) and is secured to the drive pin (7) by the grub screw (9), is forced to follow the helical section (S) tangent present on the two cams (10), which are arranged in the proximity of the drive pin (7), secured to the tool holder body (1) by the cam screw (28) and placed on the housing seat (23) formed on the tool holder body (1).

The cylindrical pin (8), following the helical section (S) of the cam (10), allows the clamp (5) to move downwards along the axis of the drive pin (7) exerting a pressure on the upper surface of the insert (21) and the lower surface of insert (21) coincident with the upper surface of support (2) retained by the tool holder body (1) through the support screw (3).

The centring pin (24) present and formed on the clamp (5) is located inside the hole of the insert (21).

The inclined sliding surface (25) located on the back part of the clamp (5) slides in the sliding seat (26) formed on the tool holder body (1), allowing a radial movement of the clamp (5) in relation to the axis of the drive pin (7), which pulls the insert (21) against the insert seat (30) formed in the tool holder body (1) in order to keep the perimeter surfaces of the insert (21) positioned correctly in its seat, thus eliminating any tolerances from the manufacturing process. At this point, the system is positioned with the insert (21) installed, properly held in its seat and with the lower surface of the clamp (5) resting on the top surface of the insert (21).

The next movement, which allows the definitive locking of the insert (21) to the tool holder body (1), takes place by exerting further force needed to compress the elastic element (6) placed between the lower surface of head to the drive pin (7) and the upper surface of the clamp (5), allowing the cylindrical pin (8) to enter the detent recess (27) formed in the cam (10). The length of compression to the elastic element (6) allows the reduction of the necessary forces which, in case of absence of the said elastic element (6), would act directly on the components of the mechanism. Furthermore, when the positioning of cylindrical pin (8) in the detent recess (27) present on the cam (10) is completed, the elastic element (6) allows the clamp (5) and the cylindrical pin (8) to be pressed together, thus avoiding the possibility of the system being unlocked under the effect of the stress of a turning machining operation.

At completed action, the rapid locking system allows to lock the insert (21) in its insert seat (30) formed in the tool body (1), developing a compression which extends in the upper, lower and the perimeter surfaces of the insert (21).

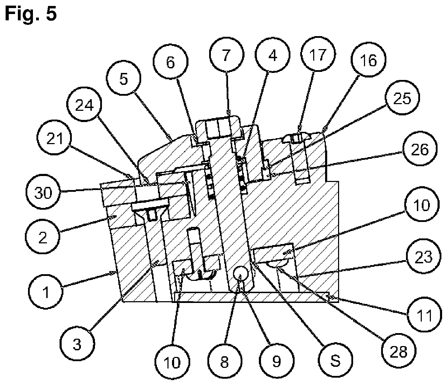

With reference to Fig. 5, the tool holder for turning is ready to perform the turning machining.

With the need to replace or rotate the insert (21) edge, the reverse operation must be done.The operator, through the use of a tool key (22) and with a reverse rotation between 90 and 0 degrees, allows the compression of the elastic element (6) and allows the cylindrical pin (8) to exit from the detent recess (27), releasing the centring pin (24) from the insert (21) hole and the inclined sliding surface (25) from the sliding seat (26).

During the rotation of the drive pin (7), the compression spring (4) pushes the clamp (5) upwards and along the axis of the drive pin (7), unlocking the entire system. In order to allow the clamp (9) to keep the centring button (24) always aligned with the hole axis of the insert (21), and not allow any rotation movement to the clamp (5), an upper guide (16) is provided, which is held to the tool holder body (1) through the upper guide screw (17). The upper guide (16) forces the clamp to move along the axis of the drive pin (7) without the possibility of rotation.

Through a subsequent modification of internal drilling of the upper guide (16) and the tool holder body (1), it is possible to equip the turning tool holder with an internal coolant supply. By concentrating the lubricant directly on the cutting edge area, it is possible to increase the tool life performance of the insert (21) edge.

In order to limit the overall dimensions of the turning tool holder, the rapid locking system is housed within the tool holder body (1) through the manufacturing of a housing seat (23) subsequently closed with a bottom closure (11) for the protection of the system.

The invention therefore speeds up and simplifies the restoring process of the turning tool holder, in order to reduce the latch time of production and consequently, increasing the production capacity of a company.

### SEQUENCE LISTING PART OF THE DESCRIPTION

- 1: Tool holder body
- 2: Support
- 3: Support screw
- 4: Compression spring
- 5: Clamp
- 6: Elastic element
- 7: Drive pin
- 8: Cylindrical pin
- 9: Grub screw
- 10: Cam
- 11: Bottom closure

- 16: Upper guide
- 17: Upper guide screw
- 21: Insert
- 22: Tool key
- 23: Housing seat
- 24: Centring pin
- 25: Inclined sliding surface
- 26: Sliding seat
- 27: Detent recess
- 28: Cam screw
- 30: Insert seat
- S: Helical section

### BEST MODE TO CARRYING OUT THE INVENTION

Since the subject of the invention is linked to the mechanism of movement, the main components that will be produced will be:
A) Production of the tool holder body (1)
B) Production of the drive pin (7)
C) Production of the cam (10) with the helical section (S) and the detent recess (27)
D) Production of the bottom closure (11)
E) Production of the upper guide (16)
F) Production of the clamp (5)

## Claims

1. Tool holder, in particular a turning tool holder equipped with a tool holder body (1) and a rapid locking system for the mechanical fastening of interchangeable inserts (21) in the tool holder, wherein the said rapid locking system is constituted by a clamp (5), through which a drive pin (7) extends, and the drive pin (7) itself, **characterised in that**, the rapid locking system further comprises a cylindrical pin (8) inserted in a seat of the drive pin (7), the cylindrical pin extending radially relative to the axis of drive pin (7) and being fixed to the drive pin (7) by means of a grub screw (9), wherein the bidirectional rotation of the drive pin (7) can activate the rapid locking system, wherein the cylindrical pin (8) cooperates with two cams (10) equipped with a helical section (S) developed on an arc of between 5 and 175 degrees, in order to allow the movement of the drive pin (7) in the direction of its axis, thereby moving the clamp (5) at the same time.

2. Tool holder as claimed in claim 1, wherein the drive pin (7) comprises a seat for a key tool (22), so that the key tool (22) can activate the rapid locking system through the bidirectional rotation of the drive pin (7).

3. Tool holder as claimed in claim 1, wherein each cam (10) is provided with a detent recess (27) for housing the cylindrical pin (8) in order to determine the end of the locking action.

4. Tool holder as claimed in claim 1, wherein each cam (10) arranged in the proximity of the drive pin (7) is secured by a cam screw (28) to the tool holder body (1) within a housing seat (23).

5. Tool holder as claimed in claim 1, wherein the grub screw (9), is arranged axially with respect to the axis of the drive pin (7) and radially with respect to the cylindrical pin (8).

6. Tool holder as claimed in claim 1, wherein a part of drive pin (7), the cylindrical pin (8), the grub screw (9) and the cams (10) are located within a housing seat (23) formed within the tool body (1), the housing seat being closed by a bottom closure (11) by means of a bottom closure screw (12) for the protection of the mechanism.

7. The combination of the tool holder of claim 1 and an insert (21), wherein the said rapid locking system secures the insert (21) to an insert seat (30) formed in the tool holder body (1), developing a compression which extends between the upper surface of the insert (21) and the bottom surface of the clamp (5), between the bottom surface of the insert (21) and the upper surface of a support (2) mounted within the insert seat (30), and between the peripheral surfaces of the insert (21) and the perimeter surfaces of the insert seat (30).

8. Tool holder as claimed in claim 1 wherein a compression spring (4) is fitted on the drive pin (7), said compression spring being located between the tool holder body (1) and the clamp (5) such that it biases the clamp (5) to follow the axial movement of the drive pin (7) during its rotation, allowing a centring button (24) formed on the clamp (5) to exit from the hole or blind seat present in the insert (21).

9. Tool holder as claimed in claims 3 and 8, wherein an elastic element (6) is placed on the drive pin (7) between the drive pin (7) and the clamp (5) such that when the rapid locking system is in a closed position, the elastic element (6) and the compression spring (4) cooperate with the compression spring (4) to provide a resultant elastic action of thrust on the drive pin (7), the resultant elastic action serving to ensures the cylindrical pin (8) is retained whitin detent recess (27).

10. Tool holder as claimed in claim 1, wherein the clamp (5) is provided with a inclined sliding surface (25) cooperating with a sliding seat (26) formed in the tool holder body (1), the said inclined sliding surface (25) allowing a sliding movement of the clamp (5) parallel to the surface of insert (21 at the same time as the axial movement of the drive pin (7).

11. Tool holder as claimed in claim 1, wherein the tool holder body (1) is provided with an upper guide (16) located in the proximity of the clamp (5), the said upper guide (16) allowing the centring axis of a button (24) present on the clamp (5) to be aligned to the axis of a through hole or blind seat present in the insert (21) during the axial movement of the drive pin (7).

12. Tool holder as claimed in claim 11, wherein the said upper guide (16) is either secured to the tool holder body (1) by means of an upper guide screw (17), or formed integrally with the tool holder body (1).

13. Tool holder as claimed in claim 11, wherein the upper guide (16) is equipped with an internal passage in order to allow the passage of coolant.

## Patentansprüche

1. Werkzeughalter, insbesondere Drehwerkzeughalter, der mit einem Werkzeughalterkörper (1) ausgestattet ist und ein Schnellarretierungssystem zur mechanischen Befestigung von Wechseleinsätzen (21) in dem Werkzeughalter, wobei das Schnellarretierungssystem durch eine Klammer (5) gebildet ist aufweist, durch die sich ein Antriebsstift (7) erstreckt, und der Antriebsstift (7) selbst, **dadurch gekennzeichnet, dass**, das Schnellarretierungssystem umfasst ferner einen Zylinderstift (8), der in den Sitz des Antriebsstifts (7) eingesetzt ist, wobei der Zylinderstift (8) radial zur Achse des Antriebsstift (7) erstreckt und mittels einer Madenschraube (9) an dem Antriebszapfen (7) befestigt ist aufweist, wobei die bidirektionale Drehung des Antriebsstift (7) das Schnellarretierungssystem betätigen kann, wobei der Zylinderstift (8) mit zwei Nocken (10) zusammenwirkt, der mit einem Spiralabschnitt (S) ausgestattet ist, der auf einem Bogen zwischen 5 und 175 Grad ausgebildet ist, um die Bewegung des Antriebsstift (7) in Richtung seiner Achse zu bewegen, wodurch gleichzeitig die Klammer (5) bewegt wird.

2. Werkzeughalter nach Anspruch 1, bei dem der Antriebsstift (7) einen Sitz für ein Schlüsselwerkzeug (22) aufweist, so dass das Schlüsselwerkzeug (22) das Schnellarretierungssystem durch die bidirektionale Anordnung des Antriebsstift (7) aktivieren kann.

3. Werkzeughalter nach Anspruch 1, wobei jeder Nocken (10) mit einer Rastvertiefung (27) versehen ist zur Aufnahme des Zylinderstifts (8) aufweist, um das Ende der Sperrwirkung zu bestimmen.

4. Werkzeughalter nach Anspruch 1, bei dem jeder in der Nähe des Antriebsstift (7) angeordnete Nocken (10) durch eine Nockenschraube (28) an dem Werkzeughalterkörper (1) innerhalb eines Gehäusesitzes (23) befestigt ist.

5. Werkzeughalter nach Anspruch 1, wobei die Madenschraube (9) axial bezüglich der Achse des Antriebsstift (7) und radial bezüglich des Zylinderstift (8) angeordnet ist.

6. Werkzeughalter nach Anspruch 1, wobei ein Teil des Antriebsstifts (7), der Zylinderstift (8), die Madenschraube (9) und die Nocken (10) mit einem Gehäusesitz (23) wobei der Werkzeughalterkörper (1), der Gehäusesitz (23) durch einen Bodenverschluss (11) mittels einer unteren Verschlussschraube (12) zum Schutz des Mechanismus.

7. Die kombination des Werkzeughalters nach Anspruch 1 und des Einsatz (21), wobei das Schnellarretierungssystem den Einsatz (21) an einem Einsatzsitzes (30) sichert, der in dem Werkzeughalterkörper (1) ausgebildet ist, wobei eine Kompression entwickelt wird, die sich ausdehnt zwischen der oberen Oberfläche des Einsatz (21) und der Bodenfläche der Klammer (5) zwischen der Bodenfläche des Einsatz (21) und der oberen Fläche eines Trägers (2), der innerhalb des Einsatzsitzes (30) montiert ist, und zwischen den Umfangsflächen des Einsatz (21) und die Umfangsflächen des Einsatzsitzes (30).

8. Werkzeughalter nach Anspruch 1, wobei eine Druckfeder (4) an dem Antriebsstift (7) angebracht ist, wobei die Druckfeder (4) zwischen dem Werkzeughalterkörper (1) und der Klammer (5) derart angeordnet ist spannt die Klammer (5) vor, um der axialen Bewegung des Antriebsstift (7) während seiner Drehung zu folgen, wodurch ein an der Klammer (5) ausgebildeter Zentrierknopf (24) aus dem im Einsatz (21) vorhandenen Loch oder Blindsitz austritt.

9. Werkzeughalter nach Anspruch 3 und 8, bei dem ein Elastisches element (6) auf dem Antriebsstift (7) zwischen dem Antriebsstift (7) und der Klammer (5) angeordnet ist, so dass sich das Schnellarretierungssystem in einem geschlossenen Zustand befindet In dieser Stellung wirken das Elastisches element (6) und die Druckfeder (4) mit der Druckfeder (4) zusammen, um eine resultierende elastische Schubwirkung auf den Antriebsstift (7) bereitzustellen, wobei die resultierende elastische wirkung dazu dient, den Zylinderstift (8) in der Rastvertiefung (27) gehalten wird.

10. Werkzeughalter nach Anspruch 1, wobei die Klammer (5) mit einer geneigten Gleitfläche (25) versehen ist, die mit in dem Werkzeughalterkörper (1) ausgebildeten Schiebesitz (26) zusammenwirkt, wobei die geneigte Gleitfläche (25) Ermöglichen einer Gleitbewegung der Klammer (5) parallel zu der Oberfläche des Einsatz (21) gleichzeitig mit der axialen Bewegung des Antriebsstifts (7).

11. Werkzeughalter nach Anspruch 1, bei dem der Werkzeughalterkörper (1) mit einer oberen Führung (16) versehen ist, die sich in der Nähe der Klammer (5) befindet, wobei die obere Führung (16) die Zentrierknopf (24) eine Knopfes ermöglicht in der Klammer (5) vorhanden ist, die während der axialen Bewegung des Antriebsstifts (7) in dem Einsatz (21) vorhanden ist.

12. Werkzeughalter nach Anspruch 11, wobei die obere Führung (16) entweder mittels einer oberen Führungsschraube (17) am Werkzeughalterkörper (1) befestigt ist oder einstückig mit dem Werkzeughalterkörper (1) ausgebildet ist.

13. Werkzeughalter nach Anspruch 11, wobei die obere Führung (16) mit einem internen Durchgang ausgestattet ist, um den Durchtritt von Kühlmittel zu ermöglichen.

## Revendications

1. Porte-outil, en particulier porte-outil de tournage équipé d'un corps de porte-outil (1) et d'un système de verrouillage rapide pour la fixation mécanique d'inserts interchangeables (21) dans le porte-outil dans lequel ledit système de verrouillage rapide étant constitué par un support de serrage (5), traversée par une goupille d'entraînement (7) et par le goupille d'entraînement (7) elle-même, **caractérisée en ce que** le système de verrouillage rapide comprend en outre une broche cylindrique (8) insérée dans le siège de le goupille d'entraînement (7), goupille cylindrique (8) s'étendant radialement par rapport à l'axe de le goupille d'entraînement (7) et étant fixée à la goupille d'entraînement (7) au moyen d'une vis sans tête (9), la rotation bidirectionnelle de la goupille d'entraînement (7) pouvant être activée le système de verrouillage rapide, dans lequel la broche cylindrique (8) coopère avec deux cames (10) équipées d'une section hélicoïdale (S) développé sur un arc compris entre 5 et 175 degrés, afin de permettre le déplacement de la goupille d'entraînement (7) dans la direction de son axe, déplaçant ainsi le support de serrage (5) en même temps.

2. Porte-outil selon la revendication 1, dans lequel la goupille d'entraînement (7) comprend un siège pour un outil à clé (22), de telle sorte que l'outil à clé (22) peut activer le système de verrouillage rapide par le biais du mouvement bidirectionnel de la goupille d'entraînement (7).

3. Porte-outil selon la revendication 1, dans lequel chaque came (10) est pourvue d'un évidement d'encliquetage (27) pour loger la broche cylindrique (8) pour déterminer la fin de l'action de verrouillage.

4. Porte-outil selon la revendication 1, dans lequel chaque came (10) agencée à proximité de la goupille d'entraînement (7) est fixé par une vis à came (28) au corps de porte-outil (1), un siège de boîtier (23).

5. Porte-outil selon la revendication 1, dans lequel la vis sans tête (9) est disposée axialement par rapport à l'axe de la goupille d'entraînement (7) et radialement par rapport à la broche cylindrique (8).

6. Porte-outil selon la revendication 1, dans lequel une partie de la goupille d'entraînement (7), la broche cylindrique (8), la vis sans tête (9) et les cames (10) sont situées dans un siège de boîtier (23) formé dans corps de porte-outil (1), le siège de boîtier (23) étant fermé par une fermeture inférieure (11) au moyen d'une vis de fermeture inférieure (12) pour la protection du mécanisme.

7. La combinaison du porte-outil de la revendication 1 et de l'insert (21), ledit système de verrouillage rapide fixant l'insert (21) à un siège d'insert (30) formé dans le corps de porte-outil (1) développe une compression qui s'étend entre la surface supérieure de l'insert (21) et la surface inférieure de la serrer de serrage (5), entre la surface inférieure de l'insert (21) et la surface supérieure d'un support (2) monté sur le siège d'insert (30), et entre les surfaces périphériques de l'insert (21) et les surfaces périphériques du siège d'insert (30).

8. Porte-outil selon la revendication 1, dans lequel un ressort de compression (4) est monté sur la goupille d'entraînement (7), ledit ressort de compression (4) étant situé entre le corps du porte-outil (1) et le support de serrage (5) de telle sorte qu'il sollicite le support de serrage (5) pour qu'elle suive le mouvement axial de la goupille d'entraînement (7) pendant sa rotation, permettant ainsi à un bouton de centrage (24) formé sur le support de serrage (5) pour sortir du trou ou du siège aveugle présent dans l'insert (21).

9. Porte-Outil Selon la revendication 3 et 8, dans lequel un élément élastique (6) est placé sur la goupille d'entraînement (7) entre la goupille d'entraînement (7) et la serrer de serrage (5) de telle sorte que lorsque le système de verrouillage rapide est dans une position fermée, l'élément élastique (6) et le ressort de compression (4) coopèrent avec le ressort de compression (4) pour fournir une action élastique résultante de poussée sur la goupille d'entraînement (7), l'action élastique résultante servant à assurer la retenue de la broche cylindrique (8) sur l'évidement d'encliquetage (27).

10. Porte-outil selon la revendication 1, dans lequel le support de serrage (5) est pourvu d'une surface de coulissement inclinée (25) coopérant avec le siège coulissant (26) formé dans le corps de porte-outil (1), ladite surface de coulissement inclinée (25) permettant un mouvement coulissant de le support de serrage (5) parallèlement à la surface de l'insert (21) en même temps que le mouvement axial de la goupille d'entraînement (7).

11. Porte-outil selon la revendication 1, dans lequel le corps de porte-outil (1) est pourvu d'un guide supérieur (16) situé à proximité de le support de serrage (5), ledit guide supérieur (16) permettant le centrage de l'axe d'un bouton de centrage (24) présent dans le support de serrage (5) pour être aligné avec l'axe d'un trou traversant ou d'un siège borgne présent dans l'insert (21) pendant le mouvement axial de la goupille d'entraînement (7).

12. Porte-outil selon la revendication 11, dans lequel ledit guide supérieur (16) est soit fixé au corps du porte-outil (1) au moyen d'une vis de guide supérieure (17), soit formé d'un seul tenant avec le corps de porte-outil (1).

13. Porte-outil selon la revendication 11, dans lequel le guide supérieur (16) est équipé d'un passage interne afin de permettre le passage de l'agent de refroidissement.
